# FASCICULE DE BREVET EUROPEEN

(11) **EP 2 428 343 B1**
(45) Date de publication et mention de la délivrance du brevet: **22.05.2013**
(21) Numéro de dépôt: 11180958.8
(22) Date de dépôt: 12.09.2011
(51) Int. Cl.: B29C 41/04, B29C 33/10

(54) **Moule pour le rotomoulage muni d'un système d'évent**
Formwerkzeug für das Rotationsgiessen, das mit einem Lüftungssystem versehen ist
Mould for rotational moulding provided with a venting system

(30) Priorité: 13.09.2010 FR 1057283
(43) Date de publication de la demande: 14.03.2012
(73) Titulaire: Compagnie Plastic Omnium, 69007 Lyon (FR)
(72) Inventeur: Dougere, Jonathan, 56880 Ploeren (FR)
(74) Mandataire: Descazeaux, Charles

(56) Documents cités:
- EP-A2- 1 808 280
- DE-A1- 2 756 384
- GB-A- 2 308 326

## Description

La présente invention concerne un moule pour le rotomoulage de produits en matière plastique, notamment de conteneurs de collecte de déchets de grand volume, en particulier supérieur à 1000 L.

Le rotomoulage consiste à mettre en place dans un moule une petite quantité de matériau polymère sous forme de poudre dans le but de former un objet creux. Le moule est ensuite placé dans un four et est mis en rotation selon un, et plus généralement, une pluralité d'axes. Ainsi, grâce aux mouvements de rotation du moule, on vient déposer la matière plastique en poudre sur les parois du moule. Du fait de la température de ces parois, la poudre qui vient se déposer sur les parois passe au moins partiellement à l'état visqueux à leur contact et adhère à ces parois, de façon à former un solide visqueux qui suit le contour du moule. Cette masse est ensuite refroidie pour former l'objet moulé.

On connaît à cet effet un moule comprenant une partie fixe et une partie mobile comportant chacune des parois délimitant une chambre de moulage fermée. Cette chambre est généralement de grand volume. Au moins un orifice formant évent est ménagé dans une paroi du moule pour éviter qu'il existe une différence de pression entre l'intérieur et l'extérieur du moule, une telle différence de pression étant due notamment à la détente de l'air situé à l'intérieur du moule. De tels évents permettent également un refroidissement plus rapide du moule durant la phase de refroidissement.

On pourra par exemple se reporter au document GB2308326 qui décrit une installation apte à évacuer vers l'extérieur un fluide situé dans la chambre de moulage. La fermeture de l'installation est un bouchon d'un matériau thermodégradable et non-réutilisable.

Le document DE2756384 décrit un moule comprenant un dispositif dans lequel la cavité est mise sous vide et sous pression. Une autre installation est par exemple décrite dans le document EP1808280.

Généralement, dans l'état de la technique, on met en place, dans chacun des évents, de la paille de fer tassée, qui laisse théoriquement traverser l'air mais empêche le passage de la poudre de polymère vers l'extérieur du moule.

Toutefois, cette opération de mise en place de la paille de fer dans l'évent du moule est effectuée manuellement par un opérateur. Elle présente ainsi l'inconvénient d'être difficilement répétable. En outre, un mauvais dosage de la paille de fer peut engendrer des défauts dans le produit moulé ou des dégradations de l'outillage de moulage.

Par exemple, si une quantité de paille de fer trop importante est mise en place dans le moule, une quantité d'air insuffisante s'échappe du moule et celui-ci peut être déformé du fait de la surpression y régnant. Une forme défectueuse du produit moulé peut alors résulter de cette déformation. Une quantité de paille de fer pas suffisamment importante laisse sortir trop de poudre à l'extérieur du moule ce qui est susceptible de dégrader le fonctionnement de l'outil de rotation du moule ou de former une couche thermiquement isolante sur le moule, néfaste à la formation de l'objet moulé.

On cherche donc, pour améliorer le procédé de rotomoulage, à mieux contrôler l'aération du moule, de façon à éviter au maximum et de façon répétable la sortie de poudre à l'extérieur du moule tout en laissant un passage suffisant pour l'air.

A cet effet, l'invention a pour objet un moule pour le rotomoulage d'une pièce en matière plastique, comprenant une pluralité de parois délimitant une chambre de moulage fermée, au moins une paroi du moule comportant un orifice apte à évacuer vers l'extérieur un fluide situé dans la chambre de moulage, le moule comportant également un conduit flexible situé au moins partiellement dans la chambre de moulage, en communication de fluide avec l'orifice, le conduit comprenant une extrémité liée à la paroi du moule et une extrémité libre.

On entend par « communication de fluide » que le fluide (l'air) situé à l'intérieur du moule circule entre le conduit et l'orifice, soit que le conduit est relié directement ou indirectement à cet orifice. De même, on entend par « extrémité liée à la paroi du moule » une extrémité du conduit fixée directement ou par l'intermédiaire d'autres éléments à la paroi du moule.

De cette façon, du fait de la flexibilité du conduit et sous l'effet de la gravité, l'extrémité libre du conduit est toujours orientée vers le bas, quelle que soit l'orientation du moule. La poudre doit ainsi effectuer un trajet vertical et vers le haut pour entrer dans le conduit. Par exemple, lorsque la paroi comprenant les orifices forme la paroi inférieure du moule, le conduit flexible forme un demi-cercle, alors que lorsque cette paroi forme la paroi supérieure, il est droit et vertical avec son extrémité libre vers le bas.

Cela rend donc difficile l'entrée de la poudre dans le conduit, au vu de l'effet de la gravité, et par conséquent la poudre ne peut pas s'échapper du moule.

Ainsi, on évite tout endommagement du moule, de l'outil de rotation ou du four. On sauvegarde donc les outils de moulage et on évite de devoir prévoir une maintenance fréquente de ceux-ci.

En outre, puisque toute la poudre reste dans le moule, on s'assure que chaque conteneur est formé avec la même quantité de matière. On peut ainsi faire des économies de matière, puisqu'il n'est pas nécessaire de placer un surplus de poudre dans le moule et/ou limiter le taux de conteneur mis au rebut, du fait d'une épaisseur de paroi insuffisante.

De plus, on évite l'utilisation de paille de fer consommable et on économise donc de la matière. On diminue également le temps de cycle puisque l'on évite l'étape de mise en place de la paille de fer dans l'orifice. Le moule selon l'invention permet donc d'économiser des coûts de fabrication.

On notera également que, comme la poudre n'est pas susceptible de s'échapper du moule, le diamètre des orifices peut être modifié, notamment agrandi, pour augmenter l'efficacité du refroidissement.

Le moule selon l'invention peut également comprendre l'une ou plusieurs des caractéristiques suivantes :
- une masse est ménagée sur le conduit flexible, au voisinage de son extrémité libre. Cela permet d'accentuer encore la courbure du conduit flexible lorsque celui-ci est soumis à la gravité et de diminuer encore la probabilité que la poudre pénètre dans ce conduit,
- un conduit rigide est ménagé dans le moule, un tel conduit étant en communication de fluide avec l'orifice et solidaire de la paroi du moule, le conduit flexible étant raccordé au conduit rigide. Un tel conduit rigide permet d'éloigner de la paroi du moule l'extrémité liée, et de ce fait l'extrémité libre, du conduit flexible. On évite ainsi que le conduit flexible n'entre en contact en cours de moulage avec une paroi du moule et ne dégrade l'objet moulé,
- le moule comprend au moins deux orifices, un conduit flexible, et éventuellement un conduit rigide, étant en communication de fluide avec chacun des orifices. De cette façon, on peut créer une circulation d'air plus importante dans la chambre de moulage, de l'air entrant dans la chambre grâce à l'un des orifices puis sortant de celle-ci par l'autre orifice. Cela crée en outre un effet de convection qui permet d'accélérer encore le refroidissement de l'objet. Les orifices sont ménagés par exemple dans la même paroi du moule,
- le moule comprend un distributeur à double entrée à l'extérieur du moule, en communication de fluide avec un orifice du moule de sorte que le fluide (tel que l'air), entrant dans la chambre de moulage par cet orifice peut provenir de deux sources. Des moyens d'alimentation en fluide sous pression, tel que de l'air comprimé, de la chambre de moulage peuvent également être prévus, notamment par l'intermédiaire d'une entrée du distributeur, afin de pouvoir gérer le retrait de la pièce dans le moule. On peut en effet éviter ce retrait en plaquant grâce à l'air sous pression la matière contre les parois du moule. La pièce est ainsi conformée dans le moule. En effet, actuellement, à la fin du moulage, les pièces sont sorties du moule et replacées dans un gabarit pour conformer celle-ci dans leur forme finale, ce qui pourrait être évité grâce au moule selon l'invention. Les moyens d'alimentation peuvent être ménagés sur le moule ou être rapportés sur celui-ci en phase de refroidissement,
- un obturateur à ouverture réglable est placé à l'extérieur du moule, l'obturateur étant agencé de sorte que le fluide s'échappant du moule par l'un au moins des orifices circule dans l'obturateur. De cette façon, lors du refroidissement, on peut régler l'ouverture de l'obturateur pour gérer au mieux le retrait de la pièce.
- le conduit flexible est réalisé à base d'un matériau élastomère tel que le caoutchouc, l'élastomère silicone, ou le polyuréthane,
- le conduit rigide est réalisé à base de métal, de thermoplastique tel que le PTFE (Poly Ethylène Tétra Fluoré), ou d'un matériau composite comprenant par exemple de la résine thermodurcissable, tel que la résine époxy, renforcée de fibres,
- la masse est par exemple un anneau placé autour du conduit, au voisinage de son extrémité libre.
- La longueur du conduit flexible est supérieure à 200mm et la longueur du conduit rigide est supérieure à 10mm.

L'invention sera mieux comprise à la lecture de la description qui va suivre, donnée uniquement à titre d'exemple et faite en se référant aux dessins dans lesquels :
- la figure 1A représente une vue en coupe d'un moule selon un mode de réalisation de l'invention,
- les figures 1B et 1C représentent le moule de la figure 1A dans une autre position,
- la figure 2 est une vue en coupe d'un moule selon un autre mode de réalisation de l'invention.

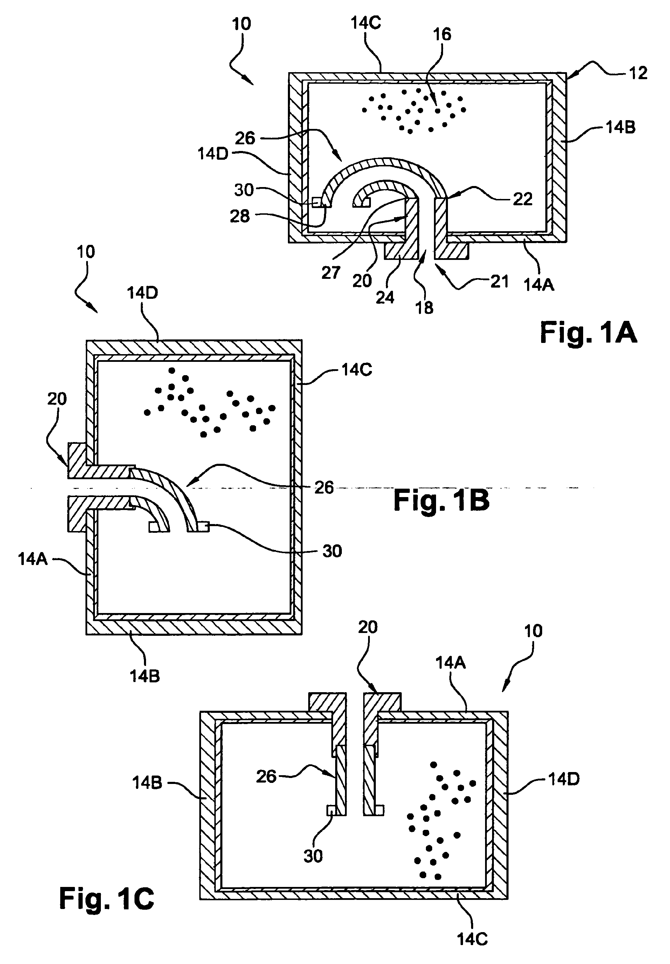

On a représenté sur les figures 1A à 1C un moule 10 selon un premier mode de réalisation de l'invention. Ce moule est un moule en deux parties moulantes, délimitant conjointement une chambre de moulage, une seule partie moulante étant visible sur les figures 1A à 1C. Le moule 10 est un moule de rotomoulage destiné à fabriquer un produit moulé formant corps creux délimité par le moule. La partie 12 montrée sur les figures 1A à 1C comporte une pluralité de parois 14A- 14D délimitant la chambre de moulage.

Comme expliqué plus haut, le rotomoulage consiste à insérer dans le moule de la poudre 16 de matière plastique et à faire tourner le moule selon au moins un axe en le chauffant pour que la poudre adhère à toutes les parois du moule puis devienne visqueuse afin de former le produit moulé.

Pour éviter une surpression dans le moule au cours du chauffage, une paroi 14A du moule comprend un orifice d'éventation 18 permettant à l'air chaud situé dans la chambre de moulage de s'échapper du moule.

Un conduit rigide 20, par exemple réalisé dans le même matériau que le moule 10 est monté sur la paroi 14A de façon à comprendre une première extrémité 21 débouchant dans l'orifice 18 et une deuxième extrémité 22 située à l'intérieur de la chambre de moulage. Ce conduit rigide 20 comprend à sa première extrémité une collerette 24 destiné à s'appliquer contre la face extérieure de la paroi 14A. La collerette du conduit rigide peut être fixée à la paroi 14A par vissage.

Le moule comprend également un conduit flexible 26, emmanché à l'aide de moyens classiques sur la deuxième extrémité 22 du conduit rigide 20, avec interposition d'un joint. Le conduit flexible est réalisé en un matériau polymère résistant à la chaleur, à base d'élastomère tel que le caoutchouc. Ce conduit comprend une extrémité 27 liée au conduit rigide et une extrémité libre 28 opposée. Au voisinage de l'extrémité libre, est agencée une masse 30. Cette masse est formée par un anneau mis en place autour du conduit flexible.

Ainsi, comme on le voit sur les différentes figures, l'extrémité libre du conduit flexible est toujours orientée vers le bas, et ce quelle que soit l'orientation du moule. Ainsi, la poudre 16, qui a toujours tendance à tomber verticalement depuis la paroi la plus haute du moule ne s'engage pas dans le conduit flexible et n'est donc pas susceptible de s'échapper du moule.

La longueur du conduit flexible est choisie en fonction de sa flexibilité de sorte que l'extrémité libre du conduit soit apte à se trouver orientée vers le bas même lorsque la paroi 14A est la paroi inférieure du moule (cas de la figure 1A). La longueur du conduit rigide est choisie pour que le conduit flexible ne vienne pas en contact avec la paroi du moule même dans le cas de la figure 1A.

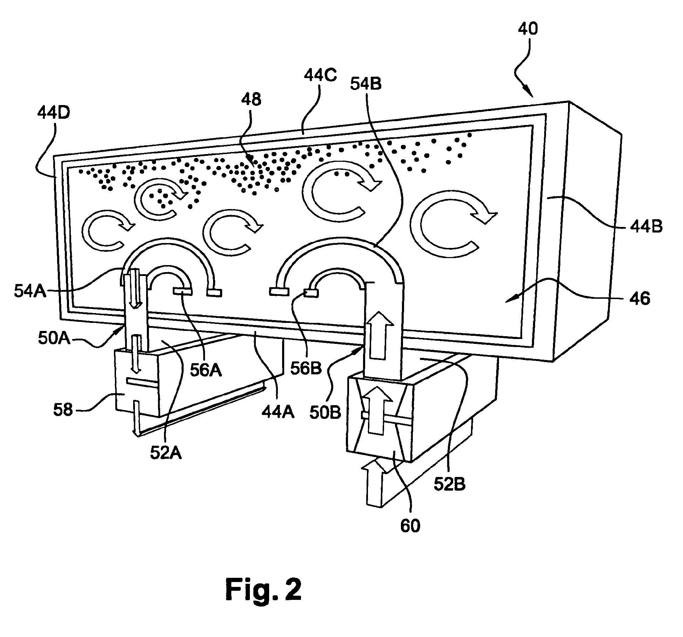

On va maintenant décrire en référence à la figure 2 un moule 40 selon un autre mode de réalisation de l'invention. Les éléments semblables à ceux du mode de réalisation des figures précédentes ne sont pas décrits en détails.

Le moule 40 comprend, comme déjà décrit, deux parties dont une seule est représentée à la figure 2. La partie comprend plusieurs parois 44A - 44D délimitant une chambre de moulage 46. De la poudre 48 de matière plastique est introduite dans le moule pour former une pièce creuse.

La paroi 44A comprend deux orifices 50A, 50B d'éventation. Dans chaque orifice est mis en place un conduit rigide 52A, 52B, situés partiellement à l'intérieur du moule, dans la chambre de moulage, et partiellement à l'extérieur de celui-ci. Chaque conduit rigide traverse la paroi 44A par le biais de l'orifice d'éventation auquel il est relié, et est, bien sûr, en communication de fluide avec l'orifice.

Sur chaque conduit rigide, est également emmanché un conduit flexible, respectivement 54A, 54B, comprenant une extrémité liée au conduit rigide et une extrémité libre opposée sur laquelle est agencée une masse 56A, 56B, comme déjà décrit précédemment.

A l'extérieur du moule, directement en communication de fluide avec le conduit 52A, est agencé un obturateur 58 à ouverture réglable permettant de limiter la quantité d'air s'échappant du moule.

A l'extérieur du moule, directement en communication de fluide avec le conduit 52B, est placé un distributeur 60 qui permet de faire circuler l'air dans le moule par le biais de deux entrées. En amont de l'une des entrées se trouvent des moyens d'alimentation du moule en fluide sous pression, par exemple en air comprimé.

L'autre des entrées est laissée libre de sorte que l'air peut sortir du moule par conduit lors de la phase de chauffage du moule.

Un tel moule permet de conformer le produit dans le moule lors de la phase de refroidissement. En effet, en injectant lors de cette phase de l'air comprimé par le premier orifice, et en réglant l'ouverture de l'obturateur de sorte que le débit de sortie de l'obturateur soit faible, on augmente la pression à l'intérieur de la chambre de moulage et on empêche ainsi le retrait de la pièce lors de son refroidissement, puisque celle-ci se plaque contre les parois du moule.

En outre, la présence de deux orifices permet d'améliorer la circulation de l'air et de créer des mouvements de convection lorsque l'air froid provenant de l'extérieur du moule rencontre l'air chaud issu du chauffage du moule.

Le refroidissement est donc plus rapide et plus efficace, et ainsi plus équilibré entre la surface de polymère en contact avec le moule et celle opposée, exposée à l'air interne. Le refroidissement équilibré assure l'homogénéité de la morphologie du polymère et conduit donc à la réduction des phénomènes de gauchissement liée au retrait différentiel.

L'invention n'est pas limitée aux modes de réalisation précédents.

Par exemple, la forme du moule n'est pas limitée à ce qui été décrit. Il peut comprendre plus de deux parties. En outre, les orifices d'éventation peuvent être répartis différemment dans le moule. Le moule peut en comprendre plus que deux. Le moule peut également comprendre deux orifices, chacun étant agencé dans une partie du moule ou sur une paroi distincte de la même partie.

On notera également que la masse peut être mise en place à l'extrémité du conduit flexible par d'autres moyens que ceux décrits précédemment. Elle peut également être de forme distincte de ce qui a été décrit précédemment.

Le moule peut également ne pas comprendre de masse, ou de conduit rigide, le conduit flexible étant dans ce cas directement relié à la paroi du moule.

Les matériaux des différents éléments ne sont pas non plus limités à ce qui a été décrit. Le conduit flexible peut par exemple être réalisé en un matériau à base d'élastomère silicone ou de polyuréthane. Le conduit rigide peut être réalisé en PTFE, ou en un mélange de résine époxy et de fibres de verre, par exemple.

Bien entendu, les obturateurs et distributeurs sont également optionnels, ainsi que les moyens d'alimentation de la chambre de moulage en fluide sous pression.

## Revendications

1. Moule (10 ;40) pour le rotomoulage d'une pièce en matière plastique, comprenant une pluralité de parois (14A-14D ;44A-44D) délimitant une chambre de moulage, au moins une paroi (14A;44A) du moule comportant un orifice (48;50A,508) apte à évacuer vers l'extérieur un fluide situé dans la chambre de moulage, **caractérisé en ce que** le moule comporte également un conduit flexible (26;54A,54B) situé au moins partiellement dans la chambre de moulage, en communication de fluide avec l'orifice, le conduit comprenant une extrémité liée à la paroi du moule et une extrémité libre.

2. Moule selon la revendication précédente, dans lequel un conduit rigide (24 ;52A,52B) est ménagé dans le moule, pour être en communication de fluide avec l'orifice et solidaire de la paroi du moule, le conduit flexible étant raccordé au conduit rigide.

3. Moule selon l'une quelconque des revendications précédentes, comprenant au moins deux orifices (50A,50B), un conduit flexible (54A,54B), et éventuellement un conduit rigide (52A,52B), étant en communication de fluide avec chacun des orifices.

4. Moule selon l'une des revendications précédentes, comprenant un distributeur (60) à double entrée à l'extérieur du moule, en communication de fluide avec un orifice (50B) du moule de sorte que le fluide entrant dans la chambre de moulage par cet orifice peut provenir de deux sources.

5. Moule selon l'une quelconque de revendications 3 et 4, comprenant des moyens d'alimentation en fluide sous pression de la chambre de moulage par l'intermédiaire d'un orifice.

6. Moule selon la revendication précédente en combinaison avec la revendication 4, dans lequel les moyens d'alimentation sont reliés à une entrée du distributeur.

7. Moule selon l'une quelconque des revendications précédentes, dans lequel un obturateur (58) à ouverture réglable est placé à l'extérieur du moule, l'obturateur étant agencé de sorte que le fluide s'échappant du moule par le ou l'un au moins des orifices (50A) circule dans l'obturateur.

8. Moule selon l'une quelconque des revendications précédentes, dans lequel le conduit flexible est réalisé à base d'un matériau élastomère tel que le caoutchouc, l'élastomère silicone, ou le polyuréthane.

9. Moule selon l'une quelconque des revendications précédentes, comprenant une masse (30; 56A, 56B) ménagée sur le conduit flexible, au voisinage de son extrémité libre.

10. Moule selon la revendication précédente, dans lequel la masse est un anneau (30 ;56A ;56B) placé autour du conduit flexible, au voisinage de son extrémité libre.

## Patentansprüche

1. Formwerkzeug (10; 40) zum Rotationsformen eines Kunststoffteils, umfassend eine Vielzahl von Wänden (14A-14D; 44A-44D), die eine Formkammer begrenzen, wobei mindestens eine Wand (14A; 44A) des Formwerkzeugs eine Öffnung (48; 50A, 50B) umfasst, die ausgeführt ist, ein Fluid, das sich in der Formkammer befindet, nach außen abzuleiten, **dadurch gekennzeichnet, dass** das Formwerkzeug auch eine flexible Leitung (26; 54A, 54B) umfasst, die sich zumindest teilweise in der Formkammer in Fluidverbindung mit der Öffnung befindet, wobei die Leitung ein Ende, das mit der Wand des Formwerkzeugs verbunden ist, und ein freies Ende umfasst.

2. Formwerkzeug nach dem vorhergehenden Anspruch, bei dem eine starre Leitung (24; 52A, 52B) in dem Formwerkzeug vorgesehen ist, um mit der Öffnung in Fluidverbindung zu stehen und mit der Wand des Formwerkzeugs verbunden zu sein, wobei die flexible Leitung an die starre Leitung angeschlossen ist.

3. Formwerkzeug nach einem der vorhergehenden Ansprüche, umfassend mindestens zwei Öffnungen (50A, 50B), eine flexible Leitung (54A, 54B) und eventuell eine starre Leitung (52A, 52B), die mit jeder der Öffnungen in Fluidverbindung steht.

4. Formwerkzeug nach einem der vorhergehenden Ansprüche, umfassend einen Verteiler (60) mit doppeltem Eingang außerhalb des Formwerkzeugs, der mit einer Öffnung (50B) des Formwerkzeugs in Fluidverbindung steht, so dass das in die Formkammer durch diese Öffnung eintretende Fluid von zwei Quellen kommen kann.

5. Formwerkzeug nach einem der Ansprüche 3 und 4, umfassend Mittel zur Versorgung der Formkammer mit druckbeaufschlagtem Fluid über eine Öffnung.

6. Formwerkzeug nach dem vorhergehenden Anspruch in Kombination mit dem Anspruch 4, bei dem die Versorgungsmittel mit einem Eingang des Verteilers verbunden sind.

7. Formwerkzeug nach einem der vorhergehenden Ansprüche, bei dem ein Verschlusselement (58) mit einstellbarer Öffnung außerhalb der Form angeordnet ist, wobei das Verschlusselement derart vorgesehen ist, dass das aus der Form durch die oder mindestens eine der Öffnungen (50A) austretende Fluid in dem Verschlusselement zirkuliert.

8. Formwerkzeug nach einem der vorhergehenden Ansprüche, bei dem die flexible Leitung auf Basis eines Elastomermaterials, wie Kautschuk, Silikonelastomer oder Polyurethan, hergestellt ist.

9. Formwerkzeug nach einem der vorhergehenden Ansprüche, umfassend eine Masse (30; 56A, 56B), die auf der flexiblen Leitung in der Nähe ihres freien Endes vorgesehen ist.

10. Formwerkzeug nach dem vorhergehenden Anspruch, bei dem die Masse ein Ring (30; 56A; 56B) ist, der um die flexible Leitung in der Nähe ihres freien Endes angeordnet ist.

## Claims

1. A mold (10; 40) for rotomolding a part out of plastics material, the mold comprising a plurality of walls (14A-14D; 44A-44D) defining a molding chamber, at least one wall (14A; 44A) of the mold including an orifice (48; 50A, 50B) suitable for discharging a fluid situated in the molding chamber, the mold being **characterized in that** it also comprises a flexible duct (26; 54A, 54B) situated at least in part in the molding chamber and in fluid-flow communication with the orifice, the duct having one end associated with the wall of the mold and one end that is free.

2. A mold according to the preceding claim, wherein a rigid duct (24; 52A, 52B) is provided in the mold in order to be in fluid-flow communication with the orifice and secured to the wall of the mold, the flexible duct being connected to the rigid duct.

3. A mold according to either preceding claim, having at least two orifices (50A, 50B), a flexible duct (54A, 54B) and optionally a rigid duct (52A, 52B) being in fluid-flow communication with each of the orifices.

4. A mold according to any preceding claim, including a manifold (60) having two inlets outside the mold and in fluid-flow communication with an orifice (50B) of the mold so that the fluid entering the molding chamber via said orifice can come from two sources.

5. A mold according to claim 3 or claim 4, including fluid feed means for feeding fluid under pressure to the molding chamber via an orifice.

6. A mold according to the preceding claim in combination with claim 4, wherein the feed means are connected to one inlet of the manifold.

7. A mold according to any preceding claim, wherein an adjustable shutter (58) is placed outside the mold, the shutter being arranged in such a manner that the fluid escaping from the mold via the, or at least one of the, orifices (50A) flows through the shutter.

8. A mold according to any preceding claim, wherein the flexible duct is made on the basis of an elastomer material such as rubber, silicone elastomer, or polyurethane.

9. A mold according to any preceding claim, including a weight (30; 56A, 56B) provided on the flexible duct, in the vicinity of its free end.

10. A mold according to the preceding claim, wherein the weight is a ring (30; 56A; 56B) placed around the flexible duct in the vicinity of its free end.
